# EUROPEAN PATENT SPECIFICATION

(11) **EP 2 338 834 B1**
(45) Date of publication and mention of the grant of the patent: **15.02.2017**
(21) Application number: 10478001.0
(22) Date of filing: 21.12.2010
(51) Int. Cl.: C01B 6/24, C01B 3/00

(54) **Method of hydrogenation of metals and their alloys**
Verfahren zur Hydrierung von Metallen und ihren Legierungen
Procédé d'hydrogénation des métaux et leurs alliages

(30) Priority: 22.12.2009 LT 2009103
(43) Date of publication of application: 29.06.2011
(73) Proprietor: Lietuvos Energetikos Institutas, 44403 Kaunas (LT)
(72) Inventor: Milcius, Darius , Lietuvos energetikos institutas, 44403 Kaunas (LT); Lelis, Martynas , Lietuvos energetikos institutas, 44403 Kaunas (LT); Pranevicius, Liudvikas, 44404 Kaunas (LT)
(74) Representative: Pranevicius, Gediminas

(56) References cited:
- JP-A- 2007 216 095
- US-A1- 2009 194 736
- PRANEVICIUS ET AL: "The role of grain boundaries in the mechanism of plasma immersion hydrogenation of nanocrystalline magnesium films", APPLIED SURFACE SCIENCE, ELSEVIER, AMSTERDAM, NL, vol. 252, no. 12, 15 April 2006 (2006-04-15), pages 4202-4208, XP005423651, ISSN: 0169-4332, DOI: DOI:10.1016/J.APSUSC.2005.06.034
- EISENBERG F G ET AL: "THE EFFECT OF SURFACE NICKEL ON THE HYDRIDING-DEHYDRIDING KINETICS OF MGH2", JOURNAL OF THE LESS-COMMON METALS, ELSEVIER-SEQUOIA S.A. LAUSANNE, CH, vol. 74, 1 January 1980 (1980-01-01), pages 323-331, XP008040016, ISSN: 0022-5088, DOI: DOI:10.1016/0022-5088(80)90170-8
- SINGH ET AL: "Nanoscale structure and the hydrogenation of Pd-capped magnesium thin films prepared by plasma sputter and pulsed laser deposition", JOURNAL OF ALLOYS AND COMPOUNDS, ELSEVIER SEQUOIA, LAUSANNE, CH, vol. 441, no. 1-2, 14 June 2007 (2007-06-14), pages 344-351, XP022116795, ISSN: 0925-8388
- PRANEVICIUS L L ET AL: "Synthesis of Mg(AlH4)2 in bilayer Mg/Al thin films under plasma immersion hydrogen ion implantation and thermal desorption processes", THIN SOLID FILMS, ELSEVIER-SEQUOIA S.A. LAUSANNE, CH, vol. 485, no. 1-2, 1 August 2005 (2005-08-01), pages 135-140, XP004962652, ISSN: 0040-6090, DOI: DOI:10.1016/J.TSF.2005.03.052

## Description

### TECHNICAL FIELD

The present invention relates to hydrogen energy technologies and particularly to methods of hydrogen storage in metal hydrides.

### BACKGROUND ART

Increasing concerns of global warming as well as recognition of steady shrinkage of fossil resources including oil, coal and natural gas makes alternative energy concerns vitally important. Hydrogen energy technologies are seen as one of the most promising alternatives for connection of unstable renewable energy resources with energy end-users. However, despite its great potential hydrogen economy still cannot be realised because there are not enough of the effective, cost competitive and reliable systems of hydrogen production, storage and utilisation. There are three main hydrogen storage methods: i) compressed gas, ii) cryogenic liquid and iii) solid state hydrogen storage then hydrogen is physisorbed on large specific area materials or chemisorbed in solid hydrides. Amongst them only solid state hydrogen storage has potential to reach long term goals which were set by industry and end-users.

Currently, metal hydrides are usually formed by the following methods:
1) metals are coated with catalysts and then exposed to high hydrogen pressure (up to several hundreds or even thousands of bars) and high temperature (up to several hundred degree Celsius). Most dominant catalysts are Pt, Pd and Ni nanoparticles which improves hydrogen adsorption and desorption kinetics. Such use of catalysts for hydrogen energy technologies is described in US2009/0194736 and JP2008266690 patents;
2) metal hydrides are formed by initiating reaction between metals and hydrogen rich chemical compounds;
3) metal hydrides also can be synthesised by ball milling process. For this process metal powders are put into container with stainless steel balls. The container is tightly closed and hydrogen atmosphere up to few hundred bars is formed. Then container is placed into ball miller machine there it is intensively shacked and/or rotated;
4) plasma based technologies: metals are immersed into hydrogen containing plasma and by applying electrical potential hydrogen ions are "extracted" from plasma and implanted into sub-surface layers.

Hydrogenation in hydrogen plasma is relatively new method and there are relatively small amount of works which are related to usage of this technology for hydrogen storage. In Japan patent application JP2007216095 principles of new hydrogenation method are described: patent authors suggest that in order to improve hydrogenation process sample surface has to be activated immersing it into high density and high temperature plasma and only then saturated with hydrogen.

**Are known studies related to a method for hydrogenating magnesium films in order to produce MgH₂ films for hydrogen storage, in which the sample comprising the magnesium film with a thickness of 2 to 2 micrometer which lies in an argon atmosphere at 0.2 Pa is immersed in a high density hydrogen plasma. Hydrogen gas is therefore supplied in order to reach a 10 Pa working pressure and the sample is biased with negative voltage pulses. Plasma immersion hydrogenation takes place at a temperature of 450K (**L. Pranevicius et al. "The role of grain boundaries in the mechanism of plasma immersion hydrogenation of nanocrystalline magnesium films", Applied Surface Science, Elsevier, Amsterdam, 2006**).**

**It has also been disclosed that the use of well-dispersed surface nickel in the form of a thin layer leads to a better hydrogen desorption rate in the case of magnesium hydride and brings it into the desorption range required for automotive storage. This is due to the good dispersion of nickel which counterbalances the decrease in the hydrogen desorption rate originating in nickel crystallines (**F. G. Eisenberg et al. "The effect of surface nickel on the hydriding-dehydriding kinetics of MgH2", Journal of the less-common metals, Elsevier Sequoia S.A., Lausanne, 1980**).**

### SUMMARY OF INVENTION

The objective of this invention is to propose new technology for hydrogenation of metals and their alloys which combines 1st and 4th methods described above and allows avoiding the usage of expensive catalysts such as Pt and Pd. Furthermore, synergetic combination of surface activation and high hydrogen pressure at the single instrument leads towards considerably higher overall efficiency of the hydrogenation process. By using the proposed method it is possible to form hydrides up to ten times faster than using conventional methods.

### BRIEF DESCRIPTION OF DRAWINGS

Further the invention will be described in detail with reference to the drawings, wherein:
Fig.1 is a schematic view of hydrogenated material with thin Ni top layer;
Fig.2 is a schematic view of activation/hydrogenation chamber;
Fig.3 is an image of the hydrogen storage material after plasma treatment;
Fig.4 is an image of the hydrogen storage material after hydrogen absorption.

### DESCRIPTION OF THE PREFERRED EMBODIMENT

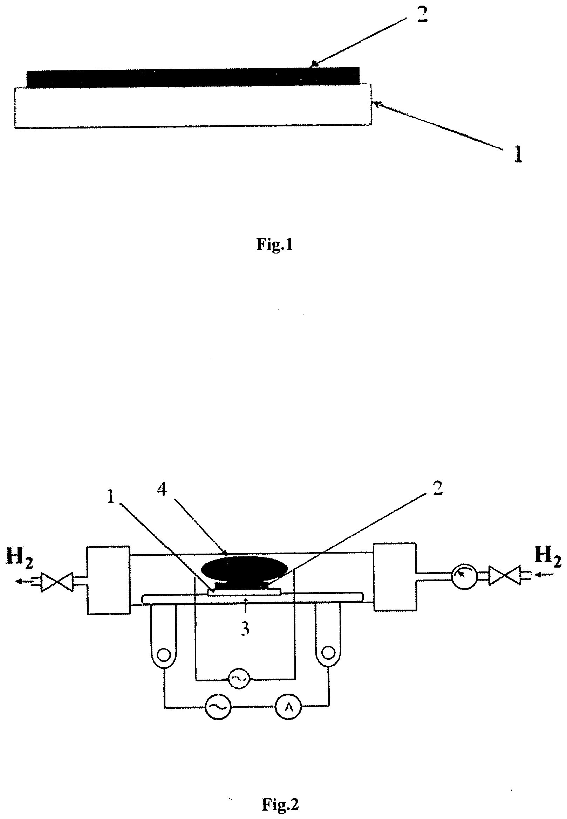

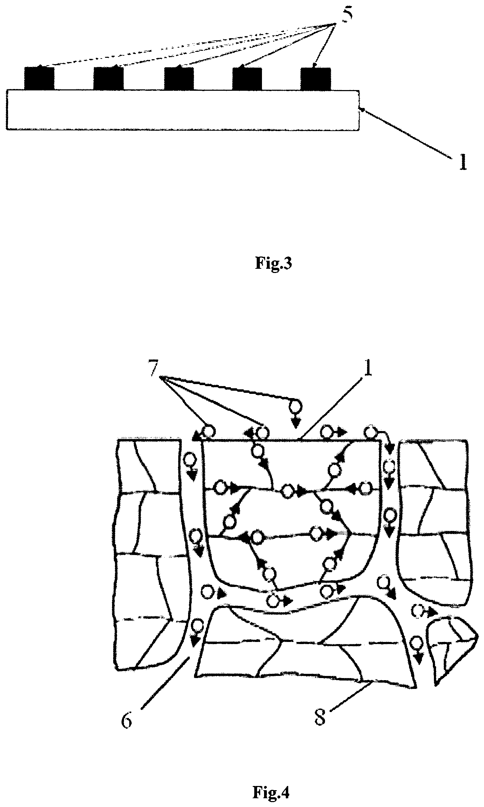

The present invention concerns a new hydrogenation method for formation of metal and their alloy hydrides by three steps:
I. First of all every piece of material 1 which will be used for hydrogen storage is covered with thin (10-100 nm) Ni cap layer 2 (fig.1). Formation of these films on material surface can be realised by employing any known nanocoating deposition technique (for example PVD - physical vapour deposition, CVD - chemical vapour deposition etc.).
II. Hydrogen storage material 1 with Ni cap layer 2 is placed on the isolated sample holder 3 and inserted into activation/hydrogenation chamber as shown in fig. 2. In order to remove oxygen, nitrogen, water vapour and other gases chamber is evacuated down to low vacuum (10⁻² Pa or lower). Alternatively chamber can be purged with hydrogen or argon/hydrogen gas mixture. Then depending on hydrogen storage material mixture of H₂(0-99%)+Ar gas is supplied to reach 0,1-1000 Pa pressure. After chamber is filled with the working gas mixture high voltage is delivered to electrodes for H₂+Ar plasma 4 initiation. Plasma treatment activates material surface as well as partially sputters Ni film. Ion flux towards the hydrogenated material is formed by specially constructed electrodes. Distance between the electrodes is set according to the Pashen's law and other practical aspects. Special electrode geometry together with protective isolation blocks other pathways for plasma propagation. For plasma initiation and/or ion extraction from plasma various power supplies can be used. Possible power supply options include various types of AC, DC RF and combined power sources with different frequency and pulse shape characteristics.
   After plasma treatment which can last from several seconds up to several tenths of minutes clusters 5 of Ni nanocatalysts are formed on material surface. Schematic view of Ni nanocatalyst is shown in Fig. 3.
   During plasma treatment/activation material surface is cleaned from all possible poisoning additives including oxides, carbides, hydroxides, nitrides etc. Furthermore, during plasma treatment formerly thin integral Ni film is reduced down to Ni nanoclusters which stay at the surface, meanwhile due to plasma induced material surface layer dynamics small part of the Ni particles is introduced into subsurface layers. Moreover, plasma activation introduces a lot of surface and subsurface defects and increases surface energy which lowers hydrogenation activation barrier.
III. During third stage hydrogen storage material 1 with formed nanoclusters 5 is left inside the chamber where high hydrogen pressure (from few bars up to few hundreds of bars) with the controlled temperature (from several tens up to few hundred of degree Celsius) is applied. For temperature control it is possible to use all known methods including but not limiting to putting all activation/hydrogenation chamber into furnace or heating it by passing high electrical current through it. Then hydrogen gas is introduced into chamber at elevated temperatures. Hydrogen molecules interact with Ni nanocatalysts 5 and split into atoms which are transported from the material surface 1 to the bulk. The biggest part of hydrogen transport from surface to the bulk proceeds through the grain boundaries 6 which are shown in Fig. 4. From the grain boundaries hydrogen atoms 7 move to the boundaries between single nanocrystals 8 there they accumulate and then critical density is reached (then interaction between neighbouring atoms becomes considerably strong), and formation of metal hydride starts. In order to have even higher intensity of the hydrogenation process, stages II and III can be repeated several times in a row.

The proposed method for metal and their alloys hydrogenation provides new possibilities for synthesis of metal hydrides avoiding the usage of expensive catalysts and relatively impure chemical technologies for cleaning of metal surfaces (from oxides, hydroxides, carbides etc.) before the hydrogenation.

Users will have a new alternative technology for formation of metal and their alloys hydrides which significantly improves hydrogenation properties as well as lower the price of metal hydride formation.

## Claims

1. Method for hydrogenation of metals and their alloys by placing a hydrogen storage material into hydrogen gas plasma and its saturation with hydrogen, **characterised by**
(a) covering the hydrogen storage material (1) with a 10-100 nm Ni cap layer (2) deposited by any known nanocoating deposition technique,
(b) placing the hydrogen storage material (1) with a thin Ni cap layer (2) into the activation/hydrogenation chamber,
(c) evacuating the activation/hydrogenation chamber down to 10⁻² Pa or lower vacuum,
(d) applying Ar or Ar+H₂ gas mixture containing from 0 up to 99% of hydrogen to the activation/hydrogenation chamber until 0,1-1000 Pa pressure is reached,
(e) delivering the voltage to electrodes and initiating the Ar+H₂ plasma (4),
(f) forming Ni nanocatalyst clusters (5) on the surface of the hydrogen storage material (1),
(g) increasing the hydrogen pressure in the chamber up to several tens of bars, and increasing the temperature in the chamber up to a few hundred degrees Celsius,
(h) transporting the hydrogen molecules, split into hydrogen atoms (7) due to interaction with Ni nanocatalysts, from the activated surface of the hydrogen storage material (1) to the bulk through the grain boundaries (6) and forming a metal hydride due to interaction between neighbouring hydrogen atoms (7).

2. The method according to claim 1 **characterised in that** stages (b-h) can be repeated several times.

## Patentansprüche

1. Verfahren zum Hydrieren von Metallen und deren Legierungen durch Anbringen von Wasserstoffspeichermaterial in Wasserstoffgasplasma und Sättigen desselben mit Wasserstoff, **gekennzeichnet durch**
(a) Bedecken des Wasserstoffspeichermaterials (1) mit einer 10-100 nm Ni-Abdeckschicht (2), die **durch** jede bekannte Abscheidetechnik zum Nanobeschichten abgeschieden wurde,
(b) Anbringen des Wasserstoffspeichermaterials (1) mit einer dünnen Ni-Abdeckschicht (2) in der Aktivierungs-/Hydrierungskammer,
(c) Evakuieren der Aktivierungs-/Hydrierungskammer auf einen Unterdruck von 10⁻² Pa oder weniger,
(d) Eintragen von Ar oder eines Ar+H₂-Gasgemisches mit 0 bis 99 % Wasserstoff in die Aktivierungs-/Hydrierungskammer, bis ein Druck von 0,1-1000 Pa erreicht ist,
(e) Anlegen der Spannung an den Elektroden und Starten des Ar+H₂-Plasmas (4),
(f) Ausbilden von Ni-Nanokatalysator-Clustern (5) auf der Oberfläche des Wasserstoffspeichermaterials (1),
(g) Erhöhen des Wasserstoffdrucks in der Kammer auf einen bar-Wert im höheren zweistelligen Bereich und Erhöhen der Temperatur in der Kammer auf einen Celsiuswert im unteren dreistelligen Bereich,
(h) Transportieren der Wasserstoffmoleküle, die **durch** die Wechselwirkung mit dem Ni-Nanokatalysator in Wasserstoffatome (7) gespalten wurden, von der aktivierten Oberfläche des Wasserstoffspeichermaterials (1) **durch** die Korngrenzen (6) in den massiven Teil und Ausbilden eines Metallhydrids **durch** die Wechselwirkung zwischen benachbarten Wasserstoffatomen (7).

2. Verfahren nach Anspruch 1, **dadurch gekennzeichnet, dass** die Stufen (b-h) mehrmals wiederholt werden können.

## Revendications

1. Procédé d'hydrogénation de métaux et de leurs alliages en plaçant un matériau de stockage d'hydrogène dans du plasma d'hydrogène gazeux et en le saturant avec de l'hydrogène, **caractérisé par**
(a) le revêtement du matériau de stockage d'hydrogène (1) avec une couche d'encapsulation de Ni (2) de 10 à 100 nm déposée par n'importe quelle technique de dépôt de nanorevêtement connue,
(b) le placement du matériau de stockage d'hydrogène (1) avec une couche mince d'encapsulation de Ni (2) dans la chambre d'activation/hydrogénation,
(c) l'évacuation de la chambre d'activation/hydrogénation à un vide inférieur ou égal à 10⁻² Pa,
(d) l'application d'Ar ou d'un mélange gazeux d'Ar+H₂ contenant de 0 jusqu'à 99 % d'hydrogène dans la chambre d'activation/hydrogénation jusqu'à ce qu'une pression de 0,1 à 1000 Pa soit atteinte,
(e) l'attribution de la tension aux électrodes et l'initiation du plasma d'Ar+H₂ (4),
(f) la formation de groupements de nanocatalyseurs de Ni (5) sur la surface du matériau de stockage d'hydrogène (1),
(g) l'augmentation de la pression d'hydrogène dans la chambre jusqu'à plusieurs dizaines de bars, et l'augmentation de la température dans la chambre jusqu'à plusieurs centaines de degrés Celsius,
(h) le transport des molécules d'hydrogène, divisées en atomes d'hydrogène (7) en raison d'interactions avec les nanocatalyseurs de Ni, de la surface activée du matériau de stockage d'hydrogène (1) jusqu'à la masse par le biais de joints de grains (6) et la formation d'un hydrure de métal en raison de l'interaction entre les atomes d'hydrogène (7) aux alentours.

2. Procédé selon la revendication 1, **caractérisé en ce que** les étapes (b à h) peuvent être répétées plusieurs fois.
